(19) Europäisches Patentamt
European Patent Office
Office européen des brevets

(11) **EP 3 403 799 A1**

(12) **EUROPÄISCHE PATENTANMELDUNG**

(43) Veröffentlichungstag:
**21.11.2018 Patentblatt 2018/47**

(51) Int Cl.:
**B29B 7/48** *(2006.01)*

(21) Anmeldenummer: **17171999.0**

(22) Anmeldetag: **19.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft 80333 München (DE)**

(72) Erfinder: **Meyer, Thomas 52223 Stolberg (DE)**

(54) **WELLENANORDNUNG**

(57)   Die Erfindung betrifft eine Wellenanordnung (100), aufweisend eine erste Welle (1), auf welcher ein erstes Stirnrad (11) montiert ist, und eine parallel zur ersten Welle (1) liegende zweite Welle (2), auf welcher ein zweites Stirnrad (22) montiert ist. Zwischen einer Stirnfläche (111) des ersten Stirnrads (11) und einer Stirnfläche (221) des zweiten Stirnrads (22) ist ein Gleitlagerspalt (5) ausgebildet.

FIG 2

EP 3 403 799 A1

**Beschreibung**

Die vorliegende Erfindung betrifft eine Wellenanordnung.

Miteinander kämmende Zahnräder können schrägverzahnt sein, um die Belastbarkeit und die Laufruhe zu erhöhen. Die Schrägverzahnung bewirkt dabei axial wirkende Kräfte, die durch geeignete Maßnahmen abgefangen werden müssen. Eine häufig angewandte Maßnahme ist eine Wellenanordnung, bei der Wellen in Wälzlageranordnungen gelagert sind, welche diese axial wirkenden Kräfte aufnehmen können, z.B. in Axialgleitlagern oder Axialwälzlagern, siehe z.B. Schlecht, Berthold: Maschinenelemente 2, Pearson Studium 2010, ISBN 978-3-8273-7146-1, Seiten 37-41 und 134-135.

Die Vorteile von Gleitlagern gegenüber Wälzlagern sind bekannt, siehe z.B. Ettemeyer, Andreas; Olbrich, Otto: Konstruktionselemente, Kapitel 10: Gleitlager, Fachhochschule München, Fachbereich 06 - Feinwerk- und Mikrotechnik, Version 3.02 vom 26.02.2007, Online zugänglich durch www.fb06.fh-muenchen.de/fb/index.php/de/download?f_id=2297, Stand 24.04.2017: geringer Platzbedarf, einfacher Einbau, teilbare Lager möglich, schwingungsdämpfend, geräuscharm, stoßunempfindlich und kostengünstig. Daher besteht aktuell ein Trend zur Verwendung von Gleitlagern.

Es ist eine Aufgabe der vorliegenden Erfindung, eine verbesserte Wellenanordnung zu schaffen.

Diese Aufgabe wird erfindungsgemäß durch eine Wellenanordnung mit den in Anspruch 1 angegebenen Merkmalen gelöst. Die vorliegende Erfindung sieht eine Wellenanordnung vor, welche eine erste Welle und eine zweite Welle aufweist. Dabei ist auf der ersten Welle ein erstes Stirnrad montiert. Auf der zweiten Welle ist ein zweites Stirnrad montiert. Außerdem liegen die erste und die zweite Welle zueinander parallel. Die beiden Stirnräder haben eine zylindrische Grundform, mit jeweils zwei Stirnflächen und einem verzahnten Umfang. Zwischen einer Stirnfläche des ersten Stirnrads und einer Stirnfläche des zweiten Stirnrads ist dabei ein Gleitlagerspalt ausgebildet.

Montage eines Stirnrads auf einer Welle bedeutet, dass eine Drehmomentübertragung vom Stirnrad auf die Welle oder in umgekehrter Richtung möglich ist. Es kann sich dabei um eine kraftschlüssige, formschlüssige oder stoffschlüssige Welle-Nabe-Verbindung handeln. Der Sitz des Stirnrads auf der Welle kann dabei auch einen elastischen Anteil aufweisen, z.B. in Umfangsrichtung oder in axialer Richtung der Welle, um Belastungsspitzen abzumildern o.ä.

Parallelität der beiden Wellen bedeutet, dass die Rotationsachse der ersten Welle im Wesentlichen parallel zu der Rotationsachse der zweiten Welle verläuft, d.h. im Rahmen der im Getriebebau üblichen Winkeltoleranzen.

Der Erfindung liegt die Erkenntnis zugrunde, dass die Tragfähigkeit von Axialgleitlagern bauartbedingt im Vergleich zu Radialgleitlagern, z.B. Kreiszylinderlagern, relativ gering ist, da der konvergente Schmierspalt bei Axiallagern durch die mechanische Herstellung von Schmierkeilen und Rastflächen oder durch eine Balligkeit von Kippsegmenten hergestellt werden muss. Bei Kreiszylinderlagern wird der konvergente Schmierspalt durch die exzentrische Verlagerung der Welle im Lagerspiel zur Lagerschale bei Belastung erreicht. Durch diese Verlagerung ergibt sich eine hohe Konvergenz des Schmierspaltes sowie eine große Tragzone, in der ein hydrodynamischer Druckaufbau erfolgt.

Beim Axiallager muss grundsätzlich segmentiert werden, da die Strömung des Schmierstoffs Fliehkräften unterworfen ist und somit in Umfangsrichtung in kleinen Abschnitten wieder zugeführt werden muss. Dies bedingt grundsätzlich die Segmentierung. Es werden mehrere, in der Regel je nach Umfang acht bis sechzehn, Segmente, insbesondere Kippsegmente, verwendet.

Dies stellt eine Unterbrechung des konvergenten Schmierspaltes in Umfangsrichtung dar. Beim Kreiszylinderlager muss der Schmierspalt nicht segmentiert werden. Die Folge ist, dass die Tragfähigkeit von Kreiszylinderlagern, insbesondere in einer Radialgleitlagerbauform, wesentlich größer ist als beim Axialgleitlager unterschiedlichster Bauformen.

Für die Anwendung von Gleitlagern, insbesondere von Axialgleitlagern, in Stirnradstufen von Windgetrieben oder Industriegetrieben besteht die Notwendigkeit einer hohen Tragfähigkeit kombiniert mit einer hohen Verschleißfestigkeit. Dies führt bei Schrägverzahnung zu sehr großen Axialgleitlagern, die Bauraum benötigen. Dieser ist nicht immer vorhanden.

Bisher wurden Wälzlager in einer Fest-Los-Lageranordnung verwendet. Werden Gleitlager verwendet, besteht die aufwändige Möglichkeit, die Wellen und das Gehäuse so zu verändern, dass ausreichend Platz vorhanden ist, die großen Axialgleitlager zu integrieren. Hierbei werden Stahlkörper und Stahlscheiben zur Aufnahme der Axialgleitlager verwendet. Diese Stahlkörper sind kostenintensiv. Dies führt bei Axialgleitlagern zu deutlichen Mehrkosten im Vergleich zur der Wälzlagervariante.

Die Erfindung besteht darin, eine erste Welle so zu lagern, dass keine Axialgleitlager für die erste Welle benötigt werden. Die Lagerung der ersten Welle kann dadurch erreicht werden, dass sich ein erstes Stirnrad, welches sich auf der ersten Welle befindet, gegen ein zweites Stirnrad, welches sich auf der zweiten Welle befindet, abstützt. Der Kern der Erfindung liegt also darin, dass die axiale Wellenlagerung durch die beiden vorhandenen Stirnräder bzw. durch deren Stirnflächen hergestellt wird.

Lediglich für den Fall des Auftretens einer Reversierlast, d.h. einer Umkehr der Lastrichtung und somit der Wellen-Drehrichtung, kann ein kleines Axiallager am Wellenende der ersten Welle angebracht werden. Dieses Axiallager für die Reversierlast kann in der Größe klein ausgelegt sein, da die Reversierlast nur kurzzeitig, z.B. für einige Sekunden, auftritt. Für diesen Fall arbeitet dann das Axiallager für die Reversierlast als Verdrängungsdrucklager und benötigt keine hydrodynamische Wirkweise durch die Schleppströmung in Umfangsrichtung.

Die überdeckende Segmentfläche, die von dem ersten Stirnrad und dem zweiten Stirnrad gebildet wird, ist ausreichend groß um die resultierende Axialkraft abzustützen. Die beiden zueinander gerichteten Stirnflächen der beiden Stirnräder bilden somit im Bereich der Kontaktzone ein Gleitlager aus. Dabei sind die Drehrichtungen der beiden Stirnräder, welche die Winkelgeschwindigkeiten $\omega\_1$ bzw. $\omega\_2$ aufweisen, vorzugsweise so gerichtet, dass beide Stirnflächen Schmierstoff in die Kontaktzone hineinfördern. Dadurch erhöht sich die hydrodynamisch effektive Winkelgeschwindigkeit $\omega\_{eff}$:

$$\omega\_{eff} = \omega\_1 + \omega\_2 \qquad\qquad (Gl.\ 1)$$

Infolge der großen Fläche der Kontaktzone und der hohen hydrodynamisch wirksamen Winkelgeschwindigkeit $\omega\_{eff}$ ergibt sich eine Axialgleitlagerung mit sehr hoher Tragfähigkeit.

Die Vorteile der erfindungsgemäßen Wellenanordnung liegen auf der Hand:

- Geringer Bauraum für die Axiallagerung, weniger Bauteile.
- Kostenreduzierung durch geringeren Materialeinsatz.
- Kleines Axialdrucklager als Verdrängungslager für Reversierlast.
- Sehr hohe Tragfähigkeit.
- Einfache Schmierung durch Tauch- und/oder Anspritzschmierung der Stirnflächen.
- Mehr Bauraum für die Radiallagerung auf den Wellenenden der schwimmend gelagerten Welle.

Die erfindungsgemäße Wellenanordnung ist geeignet für Stirnradgetriebe mit Schrägverzahnung, z.B. Windgetriebe und Industriegetriebe. Die erfindungsgemäße Wellenanordnung ist insbesondere geeignet für Wellen, die zwei Verzahnungen tragen, z.B. für eine Zwischenwelle in einem zweistufigen Stirnradteil eines Getriebes. Bei einer Zwischenwelle kann die Richtung des Schrägungswinkels der beiden Stirnräder so gewählt werden, dass die axialen Verzahnungskräfte der beiden Stirnräder entgegengerichtet sind und sich teilweise aufheben.

Vorteilhafte Ausgestaltungen und Weiterbildungen der Erfindung sind in den abhängigen Ansprüchen angegeben.

Gemäß einer bevorzugten Ausgestaltung der Erfindung ist auf einer der beiden Wellen ein drittes Stirnrad montiert, welches sich mit dem Stirnrad der anderen Welle in Eingriff befindet. In einem Fall ist das dritte Stirnrad auf der ersten Welle montiert, wobei sich das dritte Stirnrad mit dem Stirnrad der zweiten Welle in Eingriff befindet. Das Merkmal der ersten Welle ist somit, dass auf ihr zwei Verzahnungen aufgebracht sind. Die schwimmende Lagerung der ersten Welle kann dadurch erreicht werden, dass sich das erste Stirnrad, welches sich auf der ersten Welle befindet, gegen das zweite Stirnrad, welches sich auf der zweiten Welle befindet, abstützt. Im anderen Fall ist das dritte Stirnrad auf der zweiten Welle montiert, wobei sich das dritte Stirnrad mit dem Stirnrad der ersten Welle in Eingriff befindet.

Gemäß einer bevorzugten Weiterbildung der Erfindung sind das dritte Stirnrad und das Stirnrad der anderen Welle schrägverzahnt, so dass die Stirnfläche des ersten Stirnrads gegen die Stirnfläche des zweiten Stirnrads gedrückt wird. In beiden Fällen, d.h. sowohl in dem Fall, dass das dritte Stirnrad auf der ersten Welle angeordnet ist als auch in dem Fall, dass das dritte Stirnrad auf der zweiten Welle angeordnet ist, können die Schrägungswinkel der beiden Verzahnungen, die sich in Eingriff befinden, so gewählt werden, dass die resultierende Axialkraft auf der ersten Welle so gerichtet ist, das sich das erste Stirnrad an dem zweiten Stirnrad abstützt. Dabei ist das zweiten Stirnrad mit der zweiten Welle fest verbunden, wobei die zweite Welle eine Axiallagerung aufweist, d.h. die von dem ersten Stirnrad über das zweite Stirnrad auf die zweite Welle übertragene Axialkraft kann über die Axiallagerung der zweiten Welle abgefangen werden. Beispielsweise ist die zweite Welle mit einer Fest-Loslagerung versehen.

Gemäß einer bevorzugten Ausgestaltung der Erfindung weist die Wellenanordnung eine parallel zur ersten Welle liegende dritte Welle auf, auf welcher ein viertes Stirnrad montiert ist. Das vierte Stirnrad befindet sich dabei mit dem ersten Stirnrad in Eingriff. Dabei sind das erste Stirnrad und das vierte Stirnrad schrägverzahnt in einer Weise, dass die Stirnfläche des ersten Stirnrads gegen die Stirnfläche des zweiten Stirnrads gedrückt wird. Es ist also unwichtig, durch welchen Zahneingriff die Axialkraft auf die erste Welle verursacht wird: in jedem Fall kann die Axialkraft vom zweiten Stirnrad abgefangen werden.

Gemäß einer bevorzugten Ausgestaltung der Erfindung ist die Wellenanordnung in einem Wind- oder Industriegetriebe angeordnet. Insbesondere bei den modernen Windgetrieben mit ihren großen Abmessungen und Leistungen ist die Verwendung von Axialgleitlagern eine Herausforderung; die vorliegende Erfindung bietet hierzu eine kostengünstige Alternative.

Gemäß einer bevorzugten Ausgestaltung der Erfindung ist die erste Welle eine Zwischenwelle eines zweistufigen Stirnradteils eines Wind- oder Industriegetriebes.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu

FIG 1    eine Wellenanordnung mit zwei Wellen und zwei Stirnrädern;
FIG 2    eine erste Wellenanordnung mit zwei Wellen und drei Stirnrädern;
FIG 3    eine alternative Wellenanordnung mit zwei Wellen und drei Stirnrädern;
FIG 4    eine Wellenanordnung mit drei Wellen und vier Stirnrädern;
FIG 5    eine erste Lager-Einbausituation einer Wellenanordnung;
FIG 6    eine alternative Lager-Einbausituation einer Wellenanordnung;
FIG 7    ein Stirnradteil eines Windgetriebes; und
FIG 8    eine axiale Ansicht der Stirnräder von FIG 1 gemäß dem Schnitt VIII-VIII.

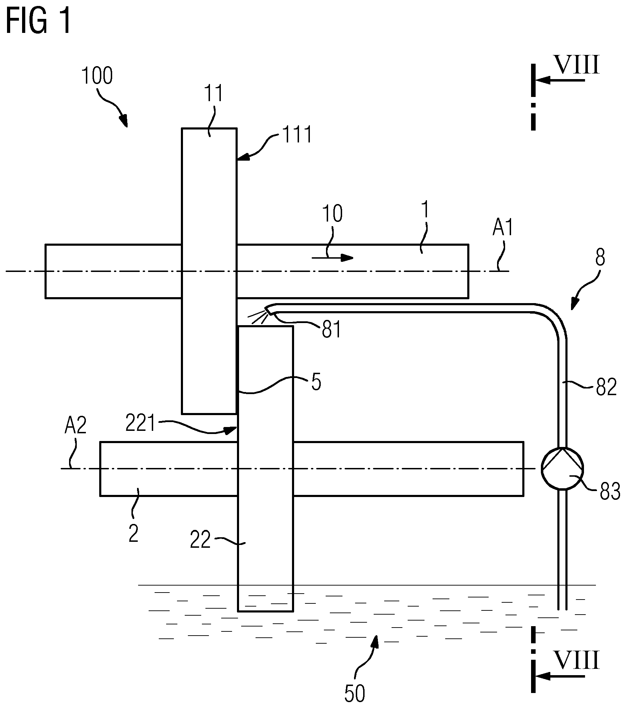

FIG 1 zeigt eine Wellenanordnung 100 eines Getriebes mit zwei Wellen 1, 2 und zwei Stirnrädern 11, 12. Die Wellenanordnung 100 weist eine erste Welle 1 und zweite Welle 2 auf. Die Rotationsachse A1 der ersten Welle 1 verläuft dabei im Wesentlichen parallel zu der Rotationsachse A2 der zweiten Welle 2. Auf der ersten Welle 1 ist ein erstes Stirnrad 11 fest montiert. Auf der zweiten Welle 2 ist ein zweites Stirnrad 22 fest montiert. Zwischen einer Stirnfläche 111 des ersten Stirnrads 11 und einer zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt eine Axialkraft 10, so dass die Stirnfläche 111 des ersten Stirnrads 11 gegen die Stirnfläche 221 des zweiten Stirnrads 22 gedrückt wird.

Die beiden zueinander gerichteten Stirnflächen 111, 221 können Tauchschmierung geschmiert werden, z.B. indem das zweite Stirnrad 22 in einen Ölsumpf 50 des Getriebes eintaucht. Es kann auch eine Anspritzschmierung der Stirnflächen 111, 221 zum Einsatz kommen. Dabei kann Öl, z.B. aus dem Ölsumpf 50 des Getriebes, mithilfe einer Ölleitung 82 durch eine Pumpe 83, welche durch einen elektrischen Motor oder durch die Drehung der zweiten Welle 2 angetrieben wird, angesaugt werden und zu einer Düse 81 gefördert werden, die das Öl in den Gleitlagerspalt 5 einsprüht.

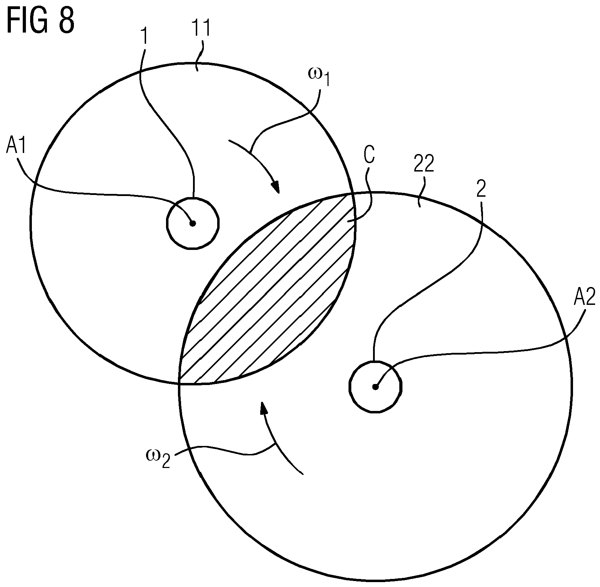

FIG 8 ist eine axiale Ansicht der Stirnräder von FIG 1 gemäß dem Schnitt VIII-VIII. Der schraffierte Bereich C ist die Kontaktzone, d.h. die Fläche, auf welcher die Stirnflächen 111, 221 aufeinander liegen.

Dabei sind die Drehrichtungen der beiden Stirnräder 11, 22, welche die Winkelgeschwindigkeiten $\omega\_1$ bzw. $\omega\_2$ aufweisen, so gerichtet, dass beide Stirnflächen Schmierstoff in die Kontaktzone hineinfördern, d.h. die beiden Stirnräder 11, 22 rotieren mit entgegen gerichteten Drehrichtungen. Dadurch erhöht sich die hydrodynamisch effektive Winkelgeschwindigkeit $\omega\_eff$ gemäß Gleichung 1 oben. Somit kann in der Kontaktzone C je nach den Randbedingungen Festkörper-, Flüssigkeits- oder Mischreibung vorliegen. Mit Flüssigkeitsreibung arbeitet das in der Kontaktzone C gebildete Axialgleitlager zwischen den Stirnflächen 111, 221 praktisch verschleißfrei, was eine Voraussetzung für einen Dauerbetrieb ist.

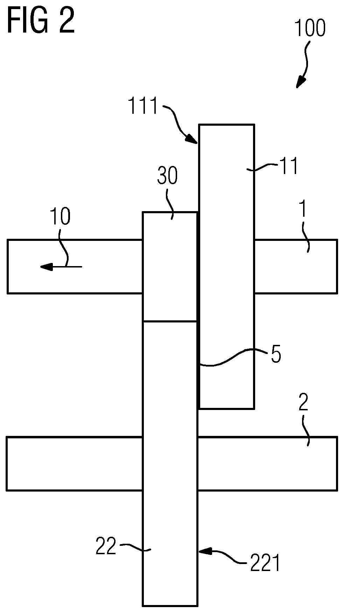

FIG 2 zeigt eine erste Wellenanordnung 100 mit zwei Wellen 1, 2 und drei Stirnrädern 11, 22 und 30. Die Wellenanordnung 100 weist eine erste Welle 1 und zweite Welle 2, welche parallel zu der ersten Welle 1 angeordnet ist, auf. Auf der ersten Welle 1 ist ein erstes Stirnrad 11 und ein drittes Stirnrad 30 fest montiert. Auf der zweiten Welle 2 ist ein zweites Stirnrad 22 fest montiert, welches sich mit dem dritten Stirnrad 30, welches auf der ersten Welle 1 angeordnet ist, in Eingriff befindet. Das dritte Stirnrad 30 und das zweite Stirnrad 22 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt durch die Schrägverzahnung eine Axialkraft 10, wie dies durch einen Pfeil, der die auf die erste Welle 1 wirkende Axialkraft 10 bezeichnet, angedeutet ist. Damit die Axialkraft 10 abgefangen werden kann, muss die zweite Welle 2 eine geeignete Axiallagerung aufweisen.

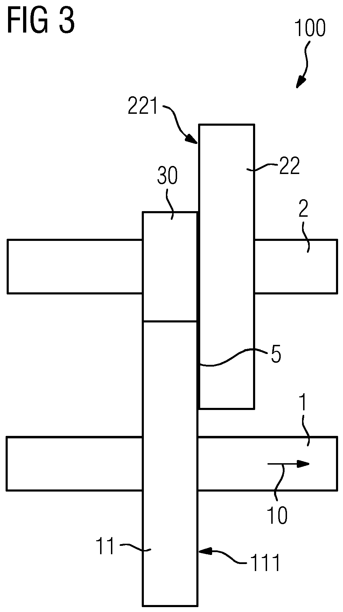

FIG 3 zeigt eine alternative Wellenanordnung 100 mit zwei Wellen 1, 2 und drei Stirnrädern 11, 22 und 30. Die Wellenanordnung 100 weist eine erste Welle 1 und zweite Welle 2, welche parallel zu der ersten Welle 1 angeordnet ist, auf. Auf der ersten Welle 1 ist ein erstes Stirnrad 11 fest montiert. Auf der zweiten Welle 2 ist ein zweites Stirnrad 22 und ein drittes Stirnrad 30, welches sich mit dem ersten Stirnrad 11, welches auf der ersten Welle 1 angeordnet ist, in Eingriff befindet, fest montiert. Das dritte Stirnrad 30 und das erste Stirnrad 11 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt durch die Schrägverzahnung eine Axialkraft 10, wie dies durch einen Pfeil, der die auf die erste Welle 1 wirkende Axialkraft 10 bezeichnet, angedeutet ist. Damit die Axialkraft 10 abgefangen werden kann, muss die zweite Welle 2 eine geeignete Axiallagerung aufweisen.

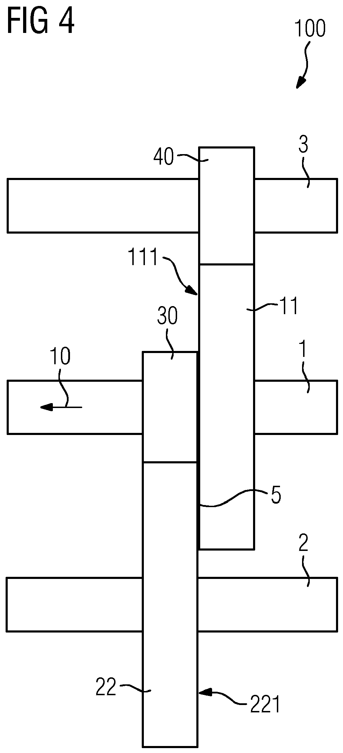

FIG 4 zeigt eine Wellenanordnung 100 mit drei Wellen 1, 2 und 3 und vier Stirnrädern 11, 22, 30 und 40. Die Wellenanordnung 100 weist eine erste Welle 1, eine zweite Welle 2 und eine dritte Welle 2 auf, welche parallel zueinander angeordnet sind. Auf der ersten Welle 1 ist ein erstes Stirnrad 11 und ein drittes Stirnrad 30 fest montiert. Auf der zweiten Welle 2 ist ein zweites Stirnrad 22 fest montiert, welches sich mit dem dritten Stirnrad 30, welches auf der ersten Welle 1 angeordnet ist, in Eingriff befindet. Auf der dritten Welle 3 ist ein viertes Stirnrad 40 fest montiert, welches sich mit dem ersten Stirnrad 11, welches auf der ersten Welle 1 angeordnet ist, in Eingriff befindet. Das dritte Stirnrad 30 und das damit kämmende zweite Stirnrad 22 sind gerad- oder schrägverzahnt. Das vierte Stirnrad 40 und das damit kämmende erste Stirnrad 11 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt durch die Schrägverzahnung des Zahneingriffs zwischen dem vierten Stirnrad 40 und dem ersten Stirnrad 11 eine Axialkraft 10, wie dies durch einen Pfeil, der die auf die erste Welle 1 wirkende Axialkraft 10 bezeichnet, angedeutet ist. Damit die Axialkraft 10 abgefangen werden kann, muss die zweite Welle 2 eine geeignete Axiallagerung aufweisen.

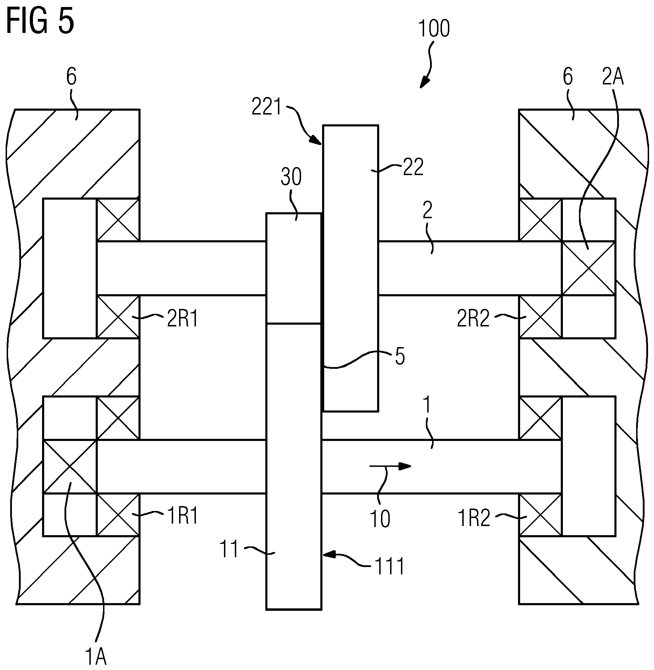

FIG 5 zeigt eine erste Lager-Einbausituation einer Wellenanordnung 100. Die Wellenanordnung 100 weist eine erste Welle 1 und zweite Welle 2, welche parallel zu der ersten Welle 1 angeordnet ist, auf. Auf der ersten Welle 1 ist ein erstes Stirnrad 11 fest montiert. Auf der zweiten Welle 2 ist ein zweites Stirnrad 22 und ein drittes Stirnrad 30, welches sich mit dem ersten Stirnrad 11, welches auf der ersten Welle 1 angeordnet ist, in Eingriff befindet, fest montiert. Das dritte Stirnrad 30 und das erste Stirnrad 11 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt durch die Schrägverzahnung eine Axialkraft 10, wie dies durch einen Pfeil, der die auf die erste Welle 1 wirkende Axialkraft 10 bezeichnet, angedeutet ist. Damit die Axialkraft 10 abgefangen werden kann, weist die zweite Welle 2, neben zwei an einem Getriebegehäuse 6 abgestützten Radiallagern 2R1 und 2R2, eine an dem Getriebegehäuse 6 abgestütztes Axiallager 2A auf. Die erste Welle 1 weist nur zwei an dem Getriebegehäuse 6 abgestützte Radiallager 1R1 und 1R2 auf, weist aber für die Axialkraft 10 kein an dem Getriebegehäuse 6 abgestütztes Axiallager auf: die auf die erste Welle 1 wirkende Axialkraft 10 wird vollständig über das durch die Stirnflächen 111, 221 gebildete Axialgleitlager 5 auf die zweite Welle 2 übertragen.

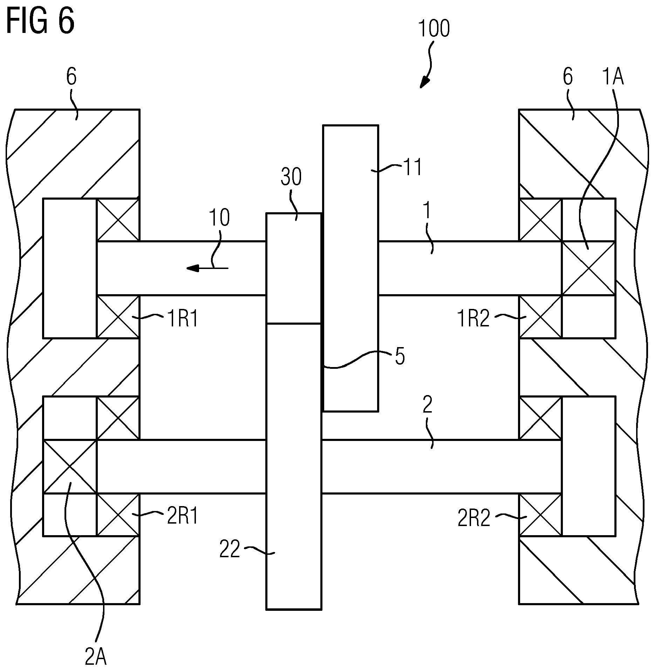

FIG 6 zeigt eine alternative Lager-Einbausituation einer Wellenanordnung 100. Die Wellenanordnung 100 weist eine erste Welle 1 und zweite Welle 2, welche parallel zu der ersten Welle 1 angeordnet ist, auf. Auf der ersten Welle 1 sind ein erstes Stirnrad 11 und ein drittes Stirnrad 30 fest montiert. Auf der zweiten Welle 2 ist ein zweites Stirnrad 22 fest montiert, welches sich mit dem dritten Stirnrad 30, welches auf der ersten Welle 1 angeordnet ist, in Eingriff befindet. Das dritte Stirnrad 30 und das zweite Stirnrad 22 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet. Auf die erste Welle 1 wirkt durch die Schrägverzahnung eine Axialkraft 10, wie dies durch einen Pfeil, der die auf die erste Welle 1 wirkende Axialkraft 10 bezeichnet, angedeutet ist. Damit die Axialkraft 10 abgefangen werden kann, weist die zweite Welle 2, neben zwei an einem Getriebegehäuse 6 abgestützten Radiallagern 2R1 und 2R2, ein an dem Getriebegehäuse 6 abgestütztes Axiallager 2A auf. Die erste Welle 1 weist nur zwei an dem Getriebegehäuse 6 abgestützte Radiallager 1R1 und 1R2 auf, weist aber für die Axialkraft 10 kein an dem Getriebegehäuse 6 abgestütztes Axiallager auf: die auf die erste Welle 1 wirkende Axialkraft 10 wird vollständig über das durch die Stirnflächen 111, 221 gebildete Axialgleitlager 5 auf die zweite Welle 2 übertragen.

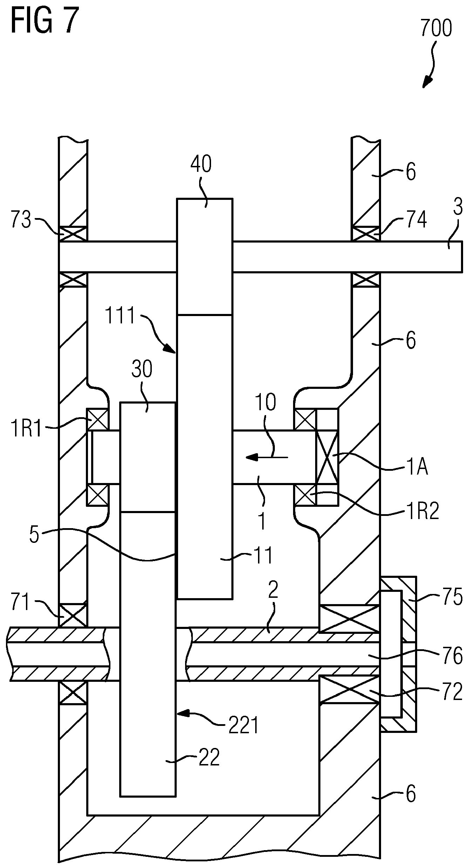

FIG 7 zeigt ein Stirnradteil 700 eines Windgetriebes. Das Stirnradteil 700 weist eine zweite Welle 2 auf, welche durch eine durch Windkraft hervorgerufene Rotation eines Windrotors zum Rotieren gebracht wird. Das Stirnradteil 700 weist außerdem eine dritte Welle 2 auf, welche als Getriebeausgangswelle eine durch Windkraft hervorgerufene Rotation für einen nachgeschalteten Generator zum Erzeugen von elektrischer Energie bereithält. Und das Stirnradteil 700 weist eine erste Welle 1 auf, welche als eine sogenannte Zwischenwelle die Rotation von der zweiten Welle 2 an die dritte Welle 3 überträgt. Alle drei Wellen 1, 2, 3 sind im Stirnradteil 700 des Windgetriebes parallel zueinander in einem Getriebegehäuse 6 des Windgetriebes gelagert.

Auf der zweiten Welle 2, welche als eine Hohlwelle, durch deren gegenüber der Umgebung mithilfe eines Lagerdeckels 75 geschützten Hohlraum 76 ein Pitchrohr verläuft, ausgebildet ist, ist ein zweites Stirnrad 22 fest montiert. Auf der ersten Welle 1, welche als die Zwischenwelle fungiert, sind ein erstes Stirnrad 11 und ein drittes Stirnrad 30, welches sich mit dem zweiten Stirnrad 22, welches auf der zweiten Welle 2 angeordnet ist, in Eingriff befindet, fest montiert. Auf der dritten Welle 3 ist ein viertes Stirnrad 40 fest montiert, welches sich mit dem ersten Stirnrad 11, welches auf der ersten Welle 1 angeordnet ist, in Eingriff befindet. Das dritte Stirnrad 30 und das damit kämmende zweite Stirnrad 22 sind schrägverzahnt, so dass die Stirnfläche 111 des ersten Stirnrads 11 gegen die Stirnfläche 221 des zweiten Stirnrads 22 gedrückt wird. Zwischen der Stirnfläche 111 des ersten Stirnrads 11 und der zu der Stirnfläche 111 des ersten Stirnrads 11 gerichteten Stirnfläche 221 des zweiten Stirnrads 22 ist ein Gleitlagerspalt 5 ausgebildet.

Auf die erste Welle 1 wirkt durch die Schrägverzahnung des Zahneingriffs zwischen dem zweiten Stirnrad 22 und dem dritten Stirnrad 30 eine Axialkraft 10, wie dies durch einen Pfeil, der die auf die erste Welle 1 wirkende Axialkraft 10 bezeichnet, angedeutet ist. Damit die Axialkraft 10 abgefangen werden kann, muss die zweite Welle 2 eine geeignete Axiallagerung aufweisen.

Dazu weist die zweite Welle 2, neben einem an dem Getriebegehäuse 6 abgestützten Loslager 71, ein an dem Getriebegehäuse 6 abgestütztes Festlager 72 auf, welches Axialkräfte aufnehmen und abfangen kann. Die erste Welle 1 weist nur zwei an dem Getriebegehäuse 6 abgestützte Radiallager 1R1 und 1R2 auf, weist aber für die Axialkraft 10 kein an dem Getriebegehäuse 6 abgestütztes Axiallager auf: die auf die erste Welle 1 wirkende Axialkraft 10 wird vollständig über das durch die Stirnflächen 111, 221 gebildete Axialgleitlager 5 auf die zweite Welle 2 übertragen. Lediglich für den Fall des Auftretens einer Reversierlast, d.h. einer Umkehr der Lastrichtung und somit der Wellen-Drehrichtung, ist ein kleines Reversierlast-Axiallager 1A am der Axialkraft 10 entgegen gesetzten Wellenende der ersten Welle 1 angebracht. Dieses Axiallager 1A für die Reversierlast ist in der Größe klein ausgelegt, da die Reversierlast bei einem Windgetriebe nur kurzzeitig, d.h. für einige Sekunden, auftritt. Für diesen Fall arbeitet dann das Axiallager 1A für die Reversierlast als Verdrängungsdrucklager und benötigt keine hydrodynamische Wirkweise durch die Schleppströmung in Umfangsrichtung. Die dritte Welle 3 ist ebenfalls über zwei Lager 73, 74 an dem Getriebegehäuse 6 abgestützt.

## Patentansprüche

1.  Wellenanordnung (100), aufweisend

    - eine erste Welle (1), auf welcher ein erstes Stirnrad (11) montiert ist, und
    - eine parallel zur ersten Welle (1) liegende zweite Welle (2), auf welcher ein zweites Stirnrad (22) montiert ist, wobei

    zwischen einer Stirnfläche (111) des ersten Stirnrads (11) und einer Stirnfläche (221) des zweiten Stirnrads (22) ein Gleitlagerspalt (5) ausgebildet ist.

2.  Wellenanordnung (100) nach Anspruch 1,
    wobei auf einer der beiden Wellen (1, 2) ein drittes Stirnrad (30) montiert ist, welches sich mit dem Stirnrad (11, 22) der anderen Welle (1, 2) in Eingriff befindet.

3.  Wellenanordnung (100) nach Anspruch 2,
    wobei das dritte Stirnrad (30) und das Stirnrad (11, 22) der anderen Welle (1, 2) schrägverzahnt sind, so dass die Stirnfläche (111) des ersten Stirnrads (11) gegen die Stirnfläche (221) des zweiten Stirnrads (22) gedrückt wird.

4.  Wellenanordnung (100) nach einem der vorhergehenden Ansprüche, aufweisend eine parallel zur ersten Welle (1) liegende dritte Welle (3), auf welcher ein viertes Stirnrad (40) montiert ist, welches sich mit dem ersten Stirnrad (11) in Eingriff befindet, wobei das erste Stirnrad (11) und das vierte Stirnrad (40) schrägverzahnt sind, so dass die Stirnfläche (111) des ersten Stirnrads (11) gegen die Stirnfläche (221) des zweiten Stirnrads (22) gedrückt wird.

5.  Wind- oder Industriegetriebe mit einer Wellenanordnung (100) nach einem der vorhergehenden Ansprüche.

6.  Wind- oder Industriegetriebe nach Anspruch 5,
    wobei die erste Welle (1) eine Zwischenwelle eines zweistufigen Stirnradteils (700) des Getriebes ist.

FIG 1

FIG 2

FIG 3

100

221

22

30

2

5

1

10

11

111

FIG 4

100

40

3

111

11

30

10

1

5

2

22

221

FIG 5

100

6

221

30

22

2

2R1

5

2R2

1

10

1R1

1R2

11

111

1A

FIG 6

FIG 7

700

## FIG 8

Europäisches
Patentamt

European
Patent Office

Office européen
des brevets

## EUROPÄISCHER RECHERCHENBERICHT

Nummer der Anmeldung

EP 17 17 1999

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 773 654 A (FRITSCH RUDOLF P [DE]) 27. September 1988 (1988-09-27) * Spalte 11, Zeilen 24-56; Ansprüche 1-21; Abbildungen 1, 6 * ----- | 1-6 | INV. B29B7/48 |

**RECHERCHIERTE SACHGEBIETE (IPC)**

B29B

Der vorliegende Recherchenbericht wurde für alle Patentansprüche erstellt

| Recherchenort | Abschlußdatum der Recherche | Prüfer |
|---|---|---|
| Den Haag | 3. Juli 2017 | Regaud, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

..................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 1999

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2017

| Im Recherchenbericht angeführtes Patentdokument | Datum der Veröffentlichung | Mitglied(er) der Patentfamilie | Datum der Veröffentlichung |
|---|---|---|---|
| US 4773654 A | 27-09-1988 | AU 583932 B2 | 11-05-1989 |
| | | BR 8606716 A | 11-08-1987 |
| | | DE 3520662 A1 | 02-01-1987 |
| | | DK 62587 A | 06-02-1987 |
| | | EP 0208139 A1 | 14-01-1987 |
| | | FI 870245 A | 21-01-1987 |
| | | JP S63500248 A | 28-01-1988 |
| | | US 4773654 A | 27-09-1988 |
| | | WO 8607303 A1 | 18-12-1986 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SCHLECHT ; BERTHOLD.** *Maschinenelemente,* 2010, vol. 2, ISBN 978-3-8273-7146-1, 37-41, 134-135

- **ETTEMEYER, ANDREAS ; OLBRICH, OTTO.** Konstruktionselemente. 26. Februar 2007